# EUROPEAN PATENT APPLICATION

(11) **EP 1 130 589 A1**
(43) Date of publication of application: **05.09.2001**
(21) Application number: 99972351.3
(22) Date of filing: 12.11.1999
(51) Int. Cl.: G11B 11/105

(54) **METHOD OF OPTIMIZING REPRODUCTION LASER POWER FOR MAGNETO-OPTIC RECORDING MEDIUM AND MAGNETO-OPTIC DISK UNIT USING THE METHOD**

(30) Priority: 13.11.1998 JP 32384298
(71) Applicant: Sanyo Electric Co., Ltd., Moriguchi-shi, Osaka-fu 570-8677 (JP)
(72) Inventor: TAKAGI, Naoyuki, Sanyo Electric Co., Ltd., Moriguchi-shi, Osaka 570-8677 (JP); MITANI, Kenichiro, Sanyo Electric Co., Ltd., Moriguchi-shi, Osaka 570-8677 (JP)
(74) Representative: Glawe, Delfs, Moll & Partner
(86) International application number: JP9906310
(87) International publication number: WO0030088

(57) **Abstract**

A magneto-optical disk apparatus (50) includes a discrimination circuit (15) for controlling an optical head (2) and a magnetic head (3) to record a known reference signal (RF) in a magneto-optical disk (1), supplying a power setting signal (PW) to a laser driving circuit (4) to set a power of a laser beam source (20) to a predetermined level, controlling the optical head (2) and the magnetic head (3) to reproduce the known reference signal (RF) from the magneto-optical disk 1 with the set power, comparing the reproduced signal with the known reference signal (RF), and determining the set power as an optimal power if the reproduced signal is identical to the known reference signal (RF). As a result, a laser power required for magnetic domain enlargement/reproduction can be optimized.

## Description

### Technical Field

The present invention relates to a method of optimizing the reproduction laser power for magneto-optical recording mediums and to magneto-optical disk unit using the method, and more particularly to a method of determining the optimal laser power for reproducing the signals from a magneto-optical recording medium using a laser beam together with an alternating magnetic field and to a magneto-optical disk apparatus using the method.

### Background Art

Magneto-optical recording mediums have been noted as rewiztable and highly reliable recording mediums with have the large storage capacity, and they have been put into practice as computer memories or the like. Further, standardization of magneto-optical recording mediums having the storage capacity of 6.0 Gbytes are recently in progress as the AS-MO (Advanced Storage Magneto-Optical) standard and are almost available for practical use. The signal reproduction from such magneto-optical recording mediums with high density are performed by MSR (Magnetically induced Super Resolution) method, which forms a detection window in the reproducing layer of a magneto-optical recording medium by directing a laser beam thereto and transfers a magnetic domain from the recording layer to the formed detection window for reproducing the signal.

Further, a magnetic domain amplifying and reproducing technology has been developed, in which an alternating magnetic field is applied during a signal reproduction from the magneto-optical recording medium, and a laser beam and the alternating magnetic field are used together to transfer the magnetic domain of the recording layer to the reproducing layer and enlarge the signal for reproduction. Magneto-optical recording mediums which enables recording and/or reproducing of a 14Gbyte signal using this technology, has also been proposed.

If the laser power used to reproduce the signal from the magneto-optical recording medium was too weak, a signal-to-noise ratio S/N would be small, making reproduction of an accurate signal impossible. On the other hand, if the laser power was too strong, the S/N would be larger, but a recorded signal may be erased erroneously. Thus, there are optimal laser powers for reproduction of the signal from the magneto-optical recording mediums. Because the laser power suitable for reproducing on signal from a common magneto-optical recording medium has a relatively large margin, the reproduction laser power have been adjusted and fixed conventionally by skilled workers based on their experience at the time of the shipment of those products.

However, in case of the magneto-optical recording mediums using the MSR method are the magnetic domain amplifying and reproducing method, the reproduction laser power must be appropriately adjusted, and it may be impossible to reproduce the accurate signals by adjusting and fixing the reproduction laser power at the time of the product shipment as it has been done conventionally.

### Disclosure of Invention

It is an object of the present invention to provide a method of optimizing the laser power required for magnetic domains amplifying/reproduction and a magneto-optical disk units therefor.

According to one aspect of the present invention, a method of determining the optimal laser power required for reproducing the signal from a magneto-optical recording medium using a laser beam together with an alternating magnetic field including the steps of setting the laser power to a predetermined level, reproducing a known reference signal from the magneto-optical recording medium with the set laser power, comparing the reproduced signal to the known reference signal, and determining the set laser power to be the optimal laser power if the reproduced signal is identical with the known reference signal as a result of the comparison.

By an optimization method of the laser power described above, the known reference signals are reproduced with different laser power levels and the laser power is set so that the reference signal is reproduced accurately and thus the laser power required for the magnetic amplifying/reproduction can be optimized.

According to an another aspect of the present invention, a magneto-optical disk unit includes an optical head, a magnetic head and a discrimination circuit. An optical head includes a laser beam source emitting a laser beam to a magneto-optical disk. A magnetic head applies a magnetic field to the magneto-optical disk. A discrimination circuit sets a power of the laser beam source to a predetermined level, controls the optical head and the magnetic head such that an alternating magnetic field is applied and a known reference signal is reproduced from the magneto-optical disk with the set power, compares thereby reproduced signal with the known reference signal, and determines the set power to be an optimal power if the reproduced signal is identical with the known reference signal.

According to the magneto-optical disk unit mentioned above, is set to the laser power to reproduce the known reference signal with the set power and the set power is determined to be the optimal power if the reproduced signal is identical with the known signal, whereby the laser power required for the magnetic domain amplifying/reproduction can be optimized.

### Brief Description of Drawings

Fig. 1 is a block diagram showing an entire configuration of a magneto-optical disk apparatus according to an embodiment of the present invention;
Figs. 2A to 2C illustrate a principle of magnetic domain enlargement/reproduction;
Fig. 3 is a timing chart showing an operation of the magneto-optical disk apparatus shown in Fig. 1;
Fig. 4 is a plan view showing an optical disk mounted on the magneto-optical disk apparatus shown in Fig. 1;
Fig. 5 is a plan view showing a track structure of a magneto-optical disk in accordance with AS-MO;
Fig. 6 is a timing chart showing an operation of an external synchronous signal generating circuit shown in Fig. 1, detecting fine clock marks shown in Fig. 5 to generate an external synchronous signal;
Fig. 7 is a block diagram showing an example of a discrimination circuit shown in Fig. 1;
Fig. 8 is a flow chart showing an operation of a magneto-optical disk apparatus shown in Fig. 1, using the discrimination circuit shown in Fig. 7;
Fig. 9 is a timing chart showing an operation of the discrimination circuit shown in Fig. 7;
Fig. 10 is a flow chart showing an operation in a case where a known reference signal is pre-recorded in the magneto-optical disk, which is different from the one shown in Fig. 8;
Fig. 11 is a block diagram showing another example of the discrimination circuit shown in Fig. 1;
Fig. 12 is a flow chart showing an operation of the magneto-optical disk apparatus shown in Fig. 1, using the discrimination circuit shown in Fig. 11;
Fig. 13 is a flow chart showing an operation in a case where a know reference signal is pre-recorded in the magneto-optical disk, which is different from the one shown in Fig. 12;
Figs. 14A to14F illustrate a principle of magnetic domain enlargement/reproduction in a case where a magnetic field having an in-plane direction component of a magnetic film is applied;
Fig. 15 shows a position of a magnetic head for applying a magnetic field having an in-plane direction component of a magnetic film; and
Figs. 16A to 16C illustrate a configuration of the magnetic head for applying a magnetic field having an in-plane direction component of a magnetic film.

### Best Mode for Carrying Out the Invention

Embodiments of the present invention will be described below in detail with reference to the drawings.

### [Configuration]

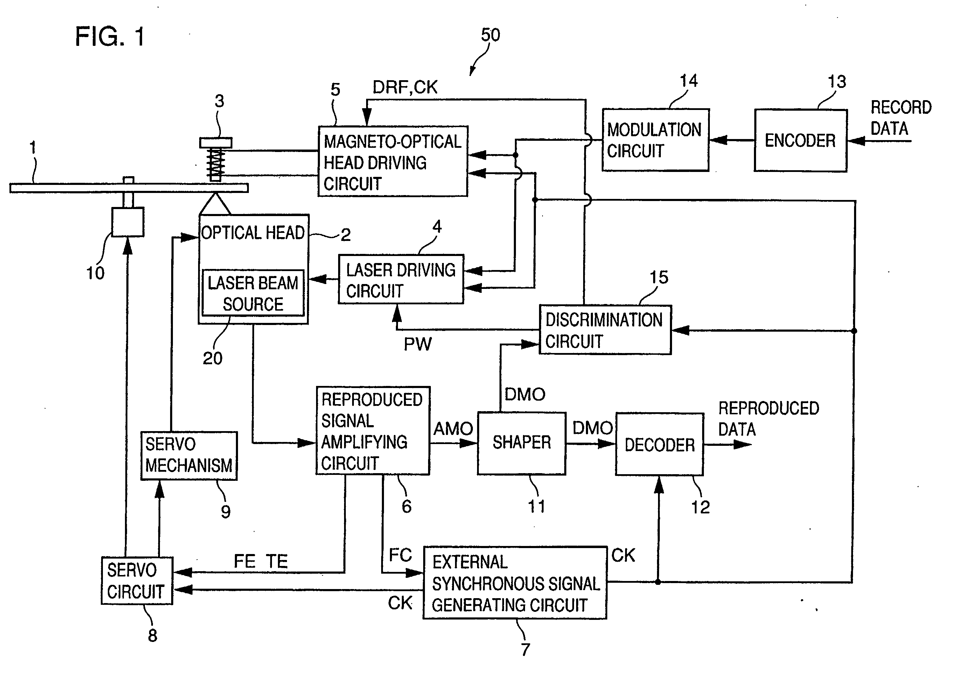

Referring to Fig. 1, a magneto-optical disk unit 50 according to an embodiment of the present invention includes an optical head 2, a magnetic head 3, a laser driving circuit 4, a magnetic head driving circuit 5, a reproduced signal amplifying circuit 6, an external synchronous signal generating circuit 7, a servo circuit 8, a servo mechanism 9, a spindle motor 10, a shaper 11, a decoder 12, an encoder 13, a modulation circuit 14 and a discrimination circuit 15.

Optical head 2 includes a laser beam source 20 emitting a laser beam having a wavelength of 635 (tolerance ± 35, the same applies in the following) nm, and detects a reflected beam from magneto-optical disk 1. Magnetic head 3 is provided opposite to optical head 2 and applies a magnetic field to magneto-optical disk 1. Laser driving circuit 4 drives laser beam source 20 in optical head 2. Magnetic head driving circuit 5 drives magnetic head 3.

Reproduced signal amplifying circuit 6 amplifies a focus error signal, a tracking error signal, a fine clock mark signal and a magneto-optical signal that are supplied from optical head 2, and then supplies a focus error signal FE and a tracking error signal TE to servo circuit 8, a fine clock mark signal FC to external synchronous signal generating circuit 7, and a magneto-optical signal MO to shaping unit 11.

External synchronous signal generating circuit 7 generates an external synchronous signal CK in response to fine clock mark signal FC, and supplies the signal to laser driving circuit 4, magnetic head driving circuit 5, servo circuit 8, decoder 12 and discriminating circuit 15. These circuits 4, 5, 8, 12 and 15 operate based on external synchronous signal CK.

Servo circuit 8 controls servo mechanism 9 based on focus error signal FE and tracking error signal TE, and rotates spindle motor 10 at a predetermined rotational speed in synchronization with external synchronous signal CK. Servo mechanism 9 performs tracking servo control and focus servo control for objective lens (not shown) in magnetic head 2, based on focus error signal FE and tracking error signal THE, respectively. Spindle motor 10 rotates magneto-optical disk 1 at a predetermined rotational speed.

A shaping unit 11 reduces noise in a magneto-optical signal AMO, and converts the analog magneto-optical signal AMO into a digital magneto-optical signal DMO and supplies the converted signal to decoder 12 and discrimination circuit 15. Decoder 12 demodulates digital magneto-optical signal DMO and outputs the signal as reproduced data. Encoder 13 encodes the recording data and supplies the data to modulation circuit 14. Modulation circuit 14 modulates a recording signal by the predetermined method, and supplies the modulated recording signal to magnetic head driving circuit 5 if the signal would be recorded by a magnetic field modulation method, whereas it supplies the modulated recording signal to laser driving circuit 4 if the signal would be recorded by an optical modulation method.

Discrimination circuit 15 generates a power setting signal PW representing the power of laser beam source 20 and supplies the signal to laser driving circuit 4. Laser driving circuit 4 sets the power of laser beam source 20 in response to power setting signal PW, and drives laser beam source 20 such that a known reference signal is reproduced from magneto-optical disk 1 with the set power. Also, discrimination circuit 15 supplies external synchronous signal CK to magnetic head driving circuit 5. Magnetic head driving circuit 5 drives magnetic head 3 such that an alternating magnetic field would be applied to magneto-optical disk 1 in response to external synchronous signal CK. Further, discrimination circuit 15 compares the reproduced digital magneto-optical signal DMO with the known reference signal, and if the reproduced digital magneto-optical signal DMO was identical with the known signal, it determines that the set power is the optimal power.

### [Magnetic Domain Enlargement/Reproduction]

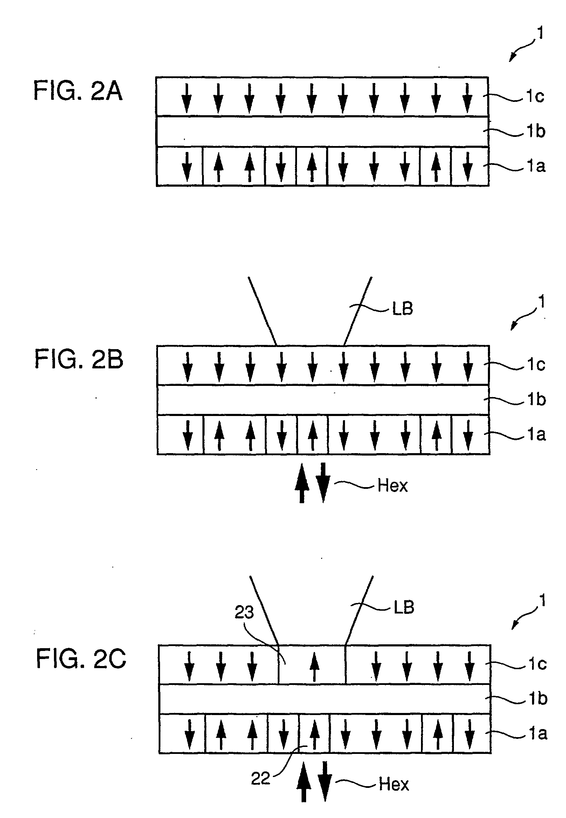

Referring to Figs. 2A to 2C, the principle of the magnetic domain enlargement/reproduction is described. As shown in Fig. 2A, magneto-optical disk 1 includes a recording layer 1a, a non-magnetic layer 1b and a reproducing layer 1c. Recording layer 1a is magnetized in accordance with a recording signal. Reproducing layer 1c is magnetized in one direction.

To reproduce a signal from magneto-optical disk 1 by the magnetic domain enlargement method, a laser beam LB is emitted from the reproducing layer 1c side of magneto-optical disk 1, and alternating magnetic field Hex is applied from the recording layer 1a side, as shown in Fig. 2B.

As a result, as shown in Fig. 2C, the temperature of a magnetic domain 22 of recording layer 1a is raised to a predetermined temperature by laser beam LB, and when a magnetic field having the same magnetization direction as that of magnetic domain 22 is applied by alternating magnetic field Hex, the magnetic domain 22 is transferred to reproducing layer 1c via non-magnetic layer 1b by magneto-static coupling and enlarged therein. Thus, an enlarged magnetic domain 23 magnetized in the same direction as that of magnetic domain 22 appears in the reproducing layer 1c. Laser beam LB emitted to reproducing layer 1c is rotated because of the magnetization of the magnetic domain 23, and is reflected in, and the reflected beam is detected to reproduce the signal recorded as magnetic domain 22.

After terminating the detection of magnetic domain 23 by laser beam LB, a magnetic field having a magnetization opposite to that of magnetic domain 23 is applied, so that the magneto-optical disk 1 is back to the initial state shown in Fig. 2A, and the subsequent magnetic domains are reproduced in a manner similar to the one described above.

In the magnetic domain enlargement reproduction described above, the power of laser beam LB is extremely important. Generally, to ensure the transfer by the magneto-static coupling, the laser power is approximately set so as to raise the temperature which a leakage magnetic field from magnetic domain 22 of recording layer 1a can attain an intensity required for the transfer. By contrast, the applicant of the present invention has proposed in Japanese Patent Application No. 10-11341 that the laser power is held to the extent that no transfer occurs by laser power emission only but the transfer occurs only when the magnetic field is applied. However, if the laser power is too low, magnetic domain 22 of recording layer 1a may not be accurately transferred to reproducing layer 1c and may not be enlarged therein. Therefore, the laser power must be set appropriately in order to perform an accurate magnetic domain enlargement/reproduction.

### [Operation]

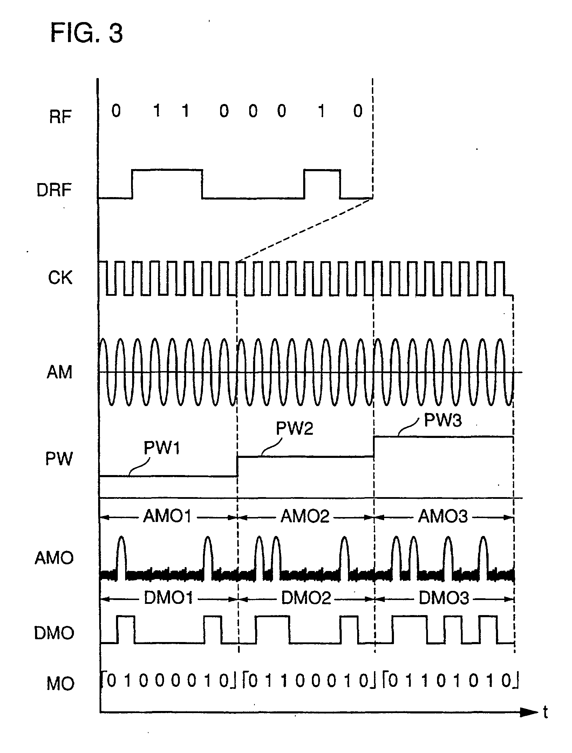

An optimizing operation of the reproduction laser power by magneto-optical disk unit 50 shown in Fig. 1 is now described with reference to Fig. 3.

When magneto-optical disk 1 is mounted to magneto-optical disk unit 50 and the recording of a signal to magneto-optical disk 1 by a conventional method is enabled, discrimination circuit 15 supplies a reference signal DRF, which is digitized from a known reference signal RF ("01100010" is herein used), which is to magnetic head driving circuit 5. The magnetic head driving circuit 5 receives the reference signal DRF from the external synchronous signal generating circuit 7, synchronized with the external synchronous signal CK, and drives the magnetic head 3 in response to the received reference signal DRF. Magnetic head 3 applies a magnetic field to the magneto-optical disk 1 in response to reference signal DRF and thereby records the reference signal RF in the magneto-optical disk 1. At this moment, the laser driving circuit 4 drives laser source 20 such that a laser beam of a predetermined intensity would be emitted from the optical head 2 to the magneto-optical disk 1.

After reference signal RF was recorded, the magneto-optical disk unit 50 sets the laser power to various levels, and reproduce the recorded known reference signal RF from the magneto-optical disk 1 with each of the set laser power level. For that purpose, the discrimination circuit 15 supplies an external synchronous signal CK from the external synchronous signal generating circuit 7 to the magneto-optical head driving circuit 5 and also supplies a power setting signal PW to the laser driving circuit 4. Magnetic head driving circuit 5 drives the magnetic head 3 such that the alternating magnetic field AM is applied to the magneto-optical disk 1 in response to external synchronous signal CK. The peak intensity of the alternating magnetic field AM is ± 23700 A/m. The laser driving circuit 4 sets the power of laser power source 20 in response to power setting signal PW, and drives the laser beam source 20 such that the signal is reproduced from the magneto-optical disk 1 by the set power. Here, the level of the power setting signal PW switches in three stages. Thus, three types of laser beams with different power levels are emitted to magneto-optical disk 1, for the predetermined period, respectively from the optical head 2.

More specifically, power of the laser beam source 20 is set to a low level, for example, 1.9 mW, in response to a power setting signal PW1. When the laser beam was irradiated to the magneto-optical disk 1 with this leveled power from the optical head 2, a magneto-optical signal AMO1 will be detected. Subsequently, the power of laser beam 20 is set to an intermediate level, for example, 2.0 mW, in response to a power setting signal PW2. When the laser beam was irradiated to the magneto-optical disk 1 with this leveled power from the optical head 2, a magneto-optical signal AMO2 will be detected. And subsequently, the power of the laser beam source 20 is set to a high level, for example, 2.1 mW, in response to a power setting signal PW3. When the laser beam was irradiated to the magneto-optical disk 1 with this leveled power from the optical head 2, a magneto-optical signal AMO3 will be detected.

These analog magneto-optical signals AMO1 to AMO3 are converted to digital magneto-optical signals DMO1 to DMO3 by shaping-unit 11. The magneto-optical signal DMO1 represents "01000010", the magneto-optical signal DMO2 represents "01100010," and the magneto-optical signal DMO3 represents "01101010." The discrimination circuit 15 compares the magneto-optical signals DMO with the reference signal DRF. The reproduced signals "01000010" and "01101010" are different from the reference signal "01100010," whereas the reproduced signal "01100010" is identical to the reference signal "01100010." When the power of the laser beam is 1.9mW, the signal "01000010" is reproduced, wherein the third digit "1" of the reference signal "01100010" is erroneously detected as "0." When the power of the laser beam is 2.1m W, the signal "01101010" is reproduced, wherein the fifth digit "0" of the reference signal "01100010" is erroneously detected as "1." When the power of the laser beam is 2.0mW, the signal "01100010" is reproduced, and it is identical to the reference signal "01100010." Therefore, the signal that are supposed to be detected as "1" are erroneously detected as "0" if the power of the laser beam was too weak, whereas the signal that are supposed to be detected as "0" are erroneously detected as "1" if the power of the laser beam was too strong.

Discrimination circuit 15 thus controls the optical head 2 and the magnetic head 3 such that the known reference signal "01100010" would be recorded in magneto-optical disk 1, sets the power of laser beam source 20 to the predetermined level, applying the alternating magnetic field AM, and controls the optical head 2 and the magnetic head 3 such that a signal is reproduced from magneto-optical disk 1 with the set power, thus, compares the reproduced signal with the known reference signal RF, and determines the set power as the optimal power if the reproduced signal was identical to the known reference signal RF. In an example above, because the signal reproduced from the magneto-optical disk 1 is identical to reference signal RF when the power of laser beam source 20 is set to 2.0 mW, the power of laser power source 20 is determined to be suitable for the magnetic domain enlargement/reproduction as 2.0 mW.

Referring to Fig. 1 again, analog magneto-optical signals AMO1-AMO3 are applied to shaping-unit 11 via reproduced signal amplifying circuit 6. In shaping-unit 11, the analog magneto-optical signals AMO1-AMO3 are converted into digital magneto-optical signals DMO1-DMO3 and are supplied to discrimination circuit 15. The discrimination circuit 15 determines if each of the supplied digital magneto-optical signals DMO1 to DMO3 are identical to known reference signal DRF, and detects a magneto-optical signal DMO2 which is identical to reference signal DRF. When magneto-optical signal DMO2 was detected, the discrimination circuit 15 controls the laser driving circuit 4 such that the power of laser beam source 20 will be set to 2.0mW which magneto-optical signal DMO2 was detected. The laser driving circuit 4 drives the laser beam source 20 in response to the power setting signal PW2, whereby the laser beam will be emitted from the optical head 2 to the magneto-optical disk 1 with the power suitable for the magnetic domain enlargement/reproduction. As the result, the accurate magnetic domain enlargement/reproduction will be performed.

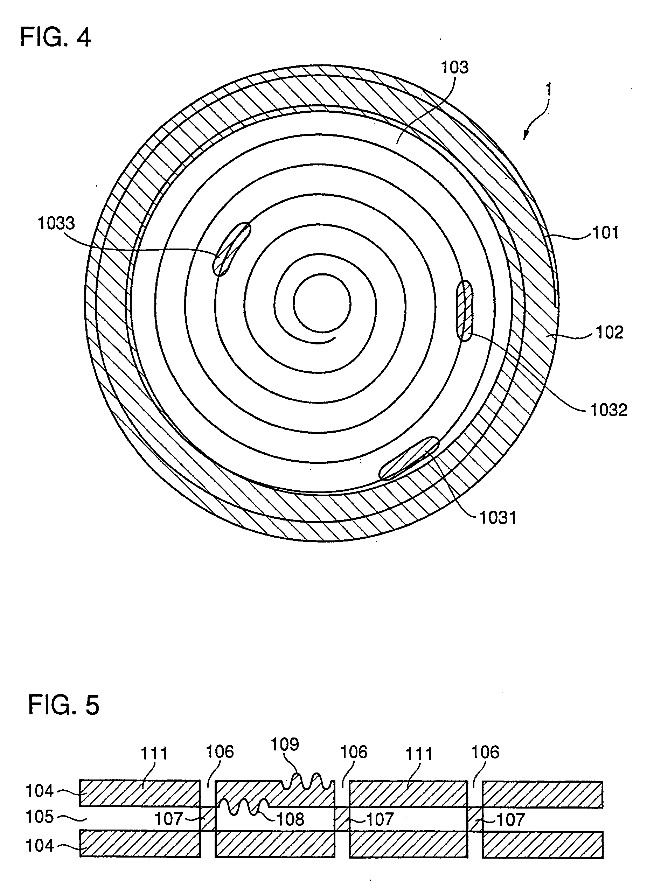

Referring to Fig. 4, the magneto-optical disk 1 has a spiral track 101. Magneto-optical disk 1 has a TOC (Table of Contents) region 102 at the periphery portion and has a data region 103 successive to the TOC region 102 at the center portion. Laser power may be optimized by recording the known reference signal in a calibration region 1031 formed at the beginning of the data region 103. This allows the laser power to be optimized by reproducing the reference signal from calibration region 1031 before reproducing the signal from data region 103. Further, the laser power may be optimized by forming a plural numbers of calibration regions 1031 to 1033 in the data region 103, and recording the reference signal in each of the calibration regions. This allows the laser power to be constantly optimized even if the property of the magnetic film is uneven in the radial direction.

In the case of AS-MO, the track is formed from the groove 104 and the land 105 as shown in Fig. 5. A land-shaped discontinuous regions 106 . are formed in every predetermined distance in the groove 104, and a groove-shaped discontinuous regions 107 are formed in every predetermined distance in the land 105. The discontinuous regions 106 and 107 form the fine clock marks. The wobbles 108 are formed on one wall of one continuous groove 104 in accordance with the address of the groove 104, whereas the wobbles 109 are formed on the other wall in accordance with the address of the adjacent land. Therefore, laser power can be optimized either in the preceding region 110 or the succeeding region 111, of the region where wobbles 108, 109 were formed.

### [Generation of External Synchronous Signal]

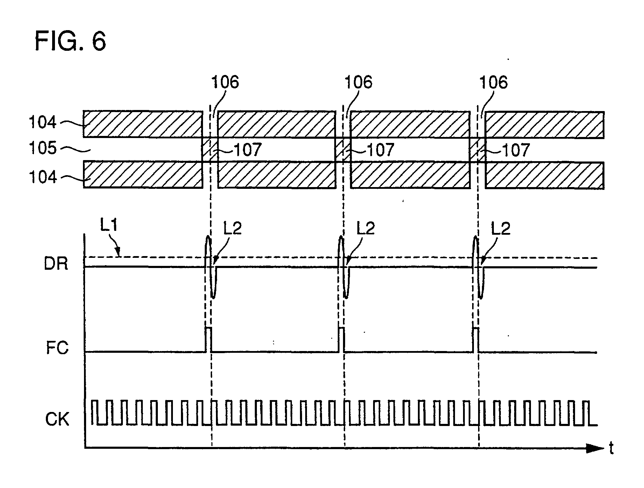

Referring to Fig. 6, fine clock marks 106 and 107 are formed in every predetermined distance on the track including the groove 104 and the land 105. Optical head 2 emits a laser beam to the groove 104 and the land 105 to detect the laser beam reflected therefrom, and generates a detected reflection signal DR by reproduced signal amplifying circuit 6. The reproduced signal amplifying circuit 6 further compares the level of detected reflection signal DR with levels L1 and L2 to generate the fine clock mark signal FC. The external synchronous signal generating circuit 7 generates an external synchronous signal CK for operating the decoder 12, the discrimination circuit 15, the laser driving circuit 4 and the magnetic head driving circuit 5 synchronously, in response to fine dock mark signal FC. Here, a predetermined number of external synchronous signals CK are present between two adjacent fine clock mark signals FC.

An external synchronous signal CK is generated due to the fine dock marks 106 and 107, so that the external synchronous signal CK is stably generated even if the reproducing signal was missing for one or more tracks.

### [Configuration of Discrimination Circuit (1)]

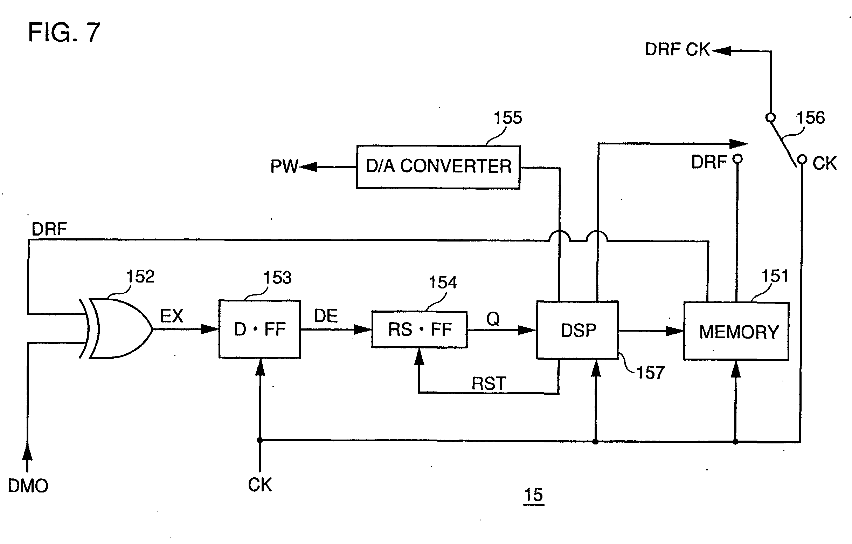

Referring to Fig. 7, the discrimination circuit 15 includes a memory 151 which stores the known reference signal RF, an exclusive OR circuit 152 which compares a digital magneto-optical signal DMO from shaping-unit 11 with the digital reference signal DRF read from the memory 151, a D (delay) flip-flop circuit 153 which latches an output signal EX from the exclusive OR circuit in response to external synchronous signal CK, a RS flip-flop 154 which is set in response to an output signal DE from D flip-flop circuit 153, a D/A converter 155 which converts a digital power setting signal into an analog power setting signal PW, a switching circuit 156 which supply the reference signal DRF or the external synchronous signal CK selectively to magnetic head driving circuit 5, and a digital signal processor (DSP) 157. DSP 157 generates a reset signal RST for resetting RS flip-flop 154 in response to the external synchronous signal CK, generates a digital power setting signal to be supplied to the D/A converter 155, and controls the switching circuit 156.

### [Method of Optimizing Laser Power (1)]

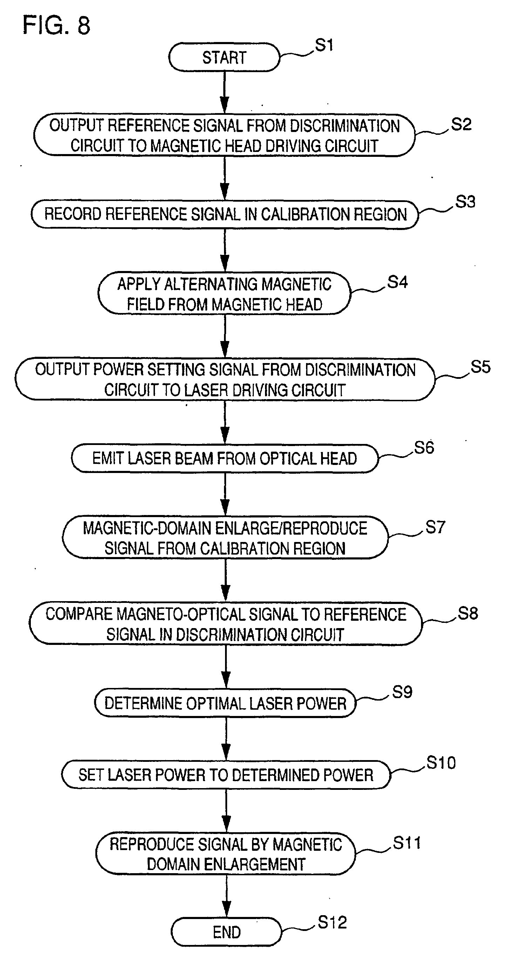

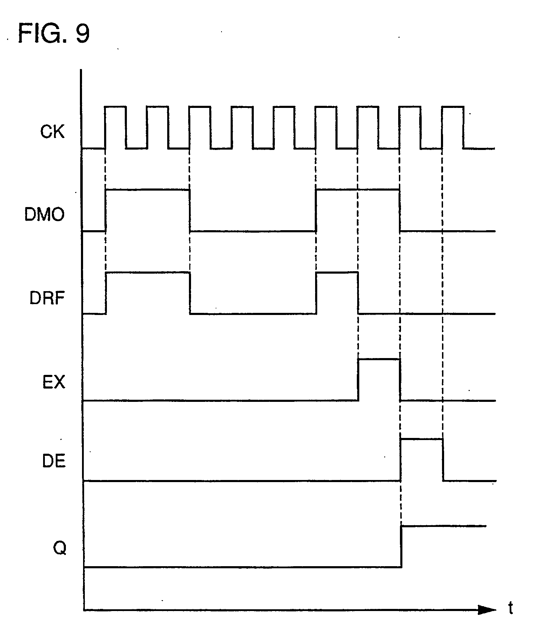

Next an operation of a magneto-optical disk unit using a discrimination circuit shown in Fig. 7 is described with reference to Figs. 8 and 9.

When an operation starts in step S1, then the reference signal DRF is supplied from the discrimination circuit 15 to magnetic head driving circuit 5 in step S2. More specifically, DSP 157 controls the switching circuit 156, whereby the reference signal DRF is read from the memory 151 to be supplied to the magnetic head driving circuit 5. Subsequently, in step S3, the optical head 2 and the magnetic head 3 record the known reference signal DRF in predetermined calibration regions 1031 to 1033 of the magneto-optical disk 1.

After the reference signal was recorded, alternating magnetic field AM is applied to the magneto-optical disk 1 from the magnetic head 3 in step S4. Subsequently, the power setting signal PW is supplied from the discrimination circuit 15 to the laser driving circuit 4 in step S5. The laser driving circuit 4 sets the power of laser beam source 20 to a predetermined level in response to the power setting signal PW.

Subsequently in step S6, the laser beam is emitted from the optical head 2 to the magneto-optical disk 1 with the set power. When the laser beam was emitted, the recorded reference signal RF is reproduced, from calibration regions 1031 to 1033 by the magnetic domain enlargement method in step S7. More concretely, analog magneto-optical signals AMO1 to AMO3 are reproduced for each laser power as reference signal RF, and further, are converted into digital magneto-optical signals DMO1 to DMO3 by shaping-unit 11.

Such magneto-optical signals DMO are input to discrimination circuit 15, and are compared with known reference signal DRF which is read from memory 151 by exclusive OR circuit 152, in step S8. Output signal EX will be at L level (logic low) if magneto-optical signals DMO are identical with reference signal DRF, whereas the signal will be at H level (logic high) if the signals are not identical to each other. Output signal EX is synchronized with the external synchronous signal CK by D flip-flop 153, whereby an output signal DE, which is synchronized with output signal EX, can be obtained. RS flip-flop 154 is set in response to output signal DE, whereby an output signal Q at H level is supplied to DSP 157. After the comparison of a series (here, 8bit) of reference signals have terminated, DSP 157 supplies reset signal RST to RS flip-flop 154. RS flip-flop 154 is reset in response to the reset signal RST. As such, a series of magnetooptical signals obtained by the reproduction of the recorded reference signals are compared with a series of reference signals by exclusive OR circuit 152, and if there is an incoincidence even in one bit, the RS flip-flop 154 is set and maintained as it is. On the other hand, if all the bits in the signals match, the RS flip-flop circuit 54 will never be set.

When the output signal Q of RS flip-flop 154 is at H level, DSP 157 raises the level of power setting signal PW and repeats the steps S5 to S8 above, whereas when the output signal Q is at L level, DSP 157 moves on to the subsequent step S9.

In step S9, when the output signal Q of the flip-flop 154 is maintained at L level even if the series of magneto-optical signals are compared with the series of reference signals, the set power is determined as the optimal power. Here, magneto-optical signal DMO2 reproduced with the laser power set at the second time is identical with the known reference signal DRF, so the power corresponding to power setting signal PW2 is determined as the optimal power.

When the optimal laser power is determined, the laser power is set to the determined power in step S10. Subsequently, in step S11, a signal is reproduced with the set laser power in magnetic domain enlargement method. In step S12, the operation is terminated.

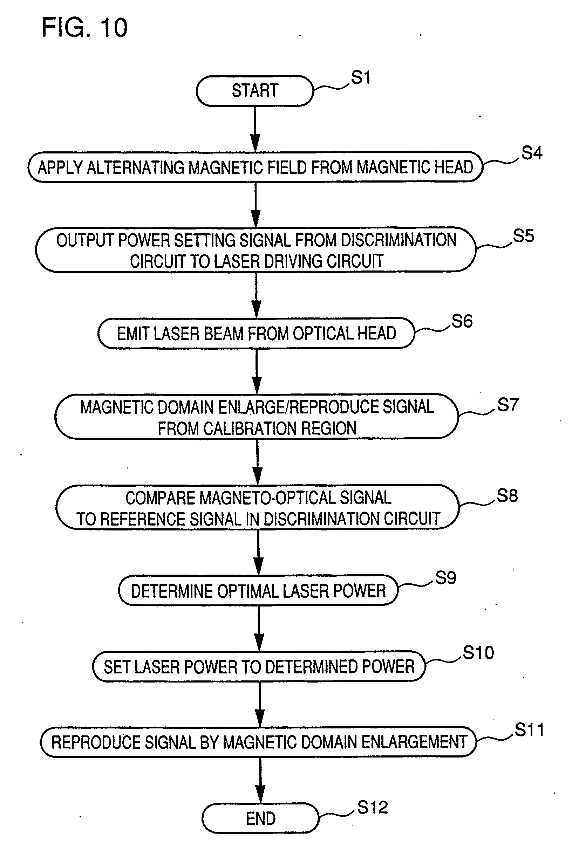

Fig. 8 is a flowchart showing an operation when no reference signals are pre-recorded in magneto-optical disk 1, and if the reference signal was pre-recorded in the magneto-optical disk 1, a signal is reproduced by the magnetic domain enlargement method according to the flowchart shown in Fig. 10. In Fig. 10, steps S2 and S3 shown in Fig. 8 are omitted. The other steps are the same as those shown in Fig. 8, and thus the description thereof will not be repeated.

### [Configuration of Discrimination Circuit (2)]

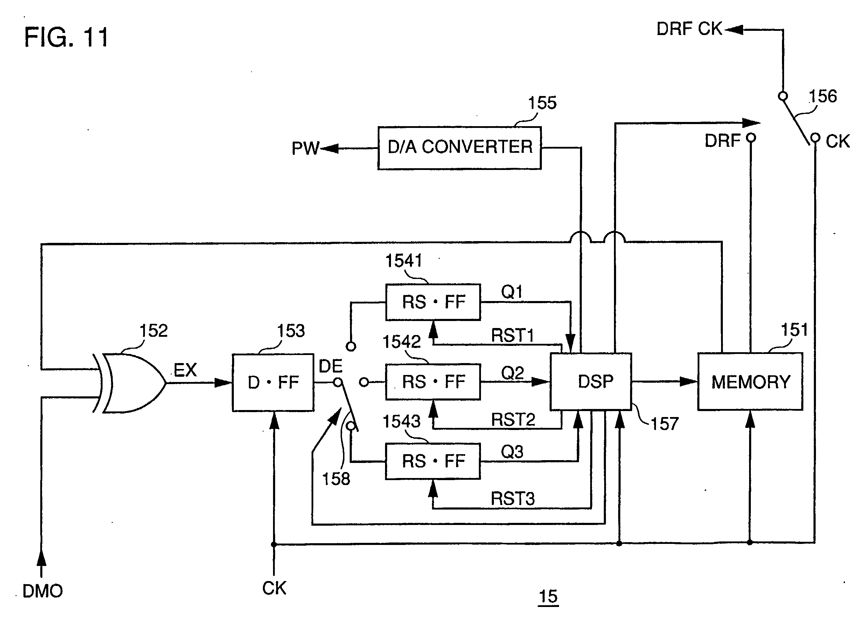

The discrimination circuit shown in Fig. 7 discriminates the results of the comparison done by exclusive OR 152, one by one, whereas the discrimination circuit shown in Fig. 11 discriminates the three results of the comparison done by exclusive OR 152, all at once. Thus, the discrimination circuit 15 includes three RS flip-flop circuits 1541 to 1543 and a switching circuit 158, in place of one RS flip-flop circuit 154. DSP 157 controls the switching circuit 158, and supplies the output signal DE of D flip-flop 153 to RS flip-flop 1541 while power setting signal PW1 is supplied to laser dliving circuit 4 to reproduce magneto-optical signals AMO1 and DMO1. DSP 157 also supplies the output signal DE of D flip-flop 153 to RS flip-flop circuit 1542 while power setting signal PW2 is supplied to laser driving circuit 4 to reproduce magneto-optical signals AMO2 and DMO2. DSP 157 also supplies output signal DE of D flip-flop circuit 153 to flip-flop circuit 1543 while power setting signal PW3 is supplied to laser driving circuit 4 to reproduce magneto-optical signals AMO3 and DMO3. After terminating the comparison of the three types of magneto-optical signals DMO1 to DMO3, DSP 157 determines whether the respective output signals of Q1 to Q3 of flip-flop circuits 1541 to 1543 are at H level or L level. Thereafter, DSP 157 supplies reset signals RST1 to RST3 reset RS flip-flop circuits 1541 to 1543, respectively.

### [Method of Optimizing Laser Power (2)]

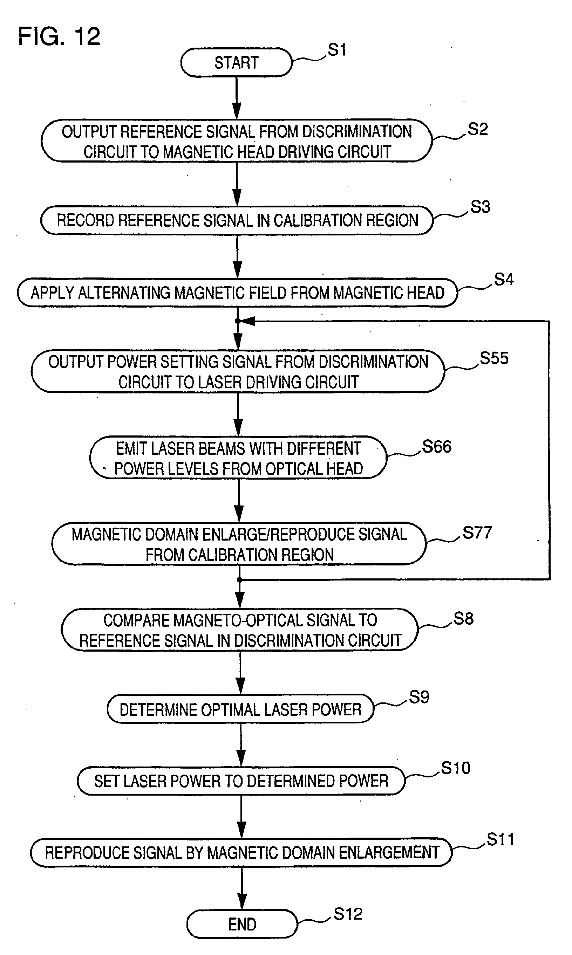

Next, an operation of magneto-optical disk unit using the discrimination circuit shown in Fig. 11 is now described. In the flowchart shown in Fig. 12, step S66 is provided instead of step S6 shown in Fig. 8. The other steps are the same as those shown in Fig. 8, and thus the description thereof will not be repeated.

Here, the steps S5 to S8 are always repeated three times, of which a laser beam is emitted with three different power levels in step S66. More specifically, in the first round, the discrimination circuit 15 supplies power setting signal PW1 to laser driving circuit 4 in step S5. Laser driving circuit 4 sets the power of laser beam source 20 in response to the power setting signal PW1. Subsequently in step S66, the laser beam is emitted from optical head 2 with the set power. This allows a signal to be reproduced, by the magnetic domain enlargement method from calibration regions 1031 to 1033 of magneto-optical disk 1 in step 7. In the second round, discrimination circuit 15 supplies power setting signal PW2 to laser driving circuit 4 in step S5, a laser beam is emitted from optical head 2 with the set power in step S66, and whereby a signal is reproduced in step S7. Finally, in the third round, discrimination circuit 15 supplies power setting signal PW3 to laser driving circuit 4 in step S5, a laser beam is emitted from optical head 2 with the set power in step S66, and whereby a signal is reproduced in step S77.

After thus obtaining magneto-optical signals DMO1 to DMO3 respectively with the three types of laser power levels, each of magnetooptical signals DMO1 to DMO3 are compared with reference signal DRF in step S8, and the optimal laser power is determined in step S9.

The optimization method (1) of the laser power described earlier, the comparison results are stored into RS flip-flop circuit 154 to discriminate the optimal laser power one by one, whereas the optimization method (2) of the laser power described herein the comparison results are stored into three RS flip-flop circuits 1541 to 1543 to discriminate the optimal laser power all at once.

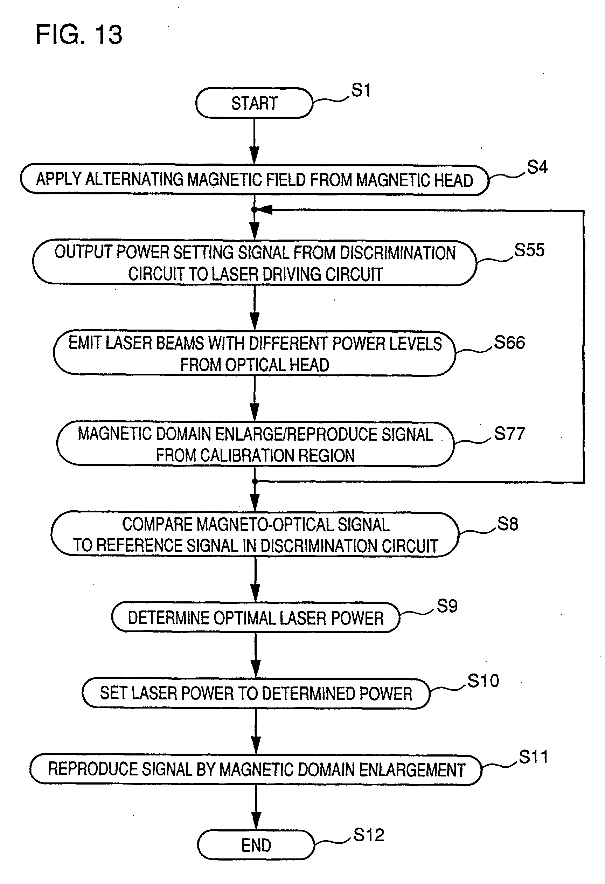

The flow chart in Fig. 12 shows an operation in which no reference signals were pre-recorded in magneto-optical disk 1, whereas the flow chart in Fig. 13 shows an operation in which a reference signals were pre-recorded in magneto-optical disk 1. In Fig. 13, steps S2 and S3 shown in Fig. 12 are not provided. The other steps are the same as those shown in Fig. 12, and thus the description thereof will not be repeated.

For reference signals, the ones shown in the table below are preferably used.

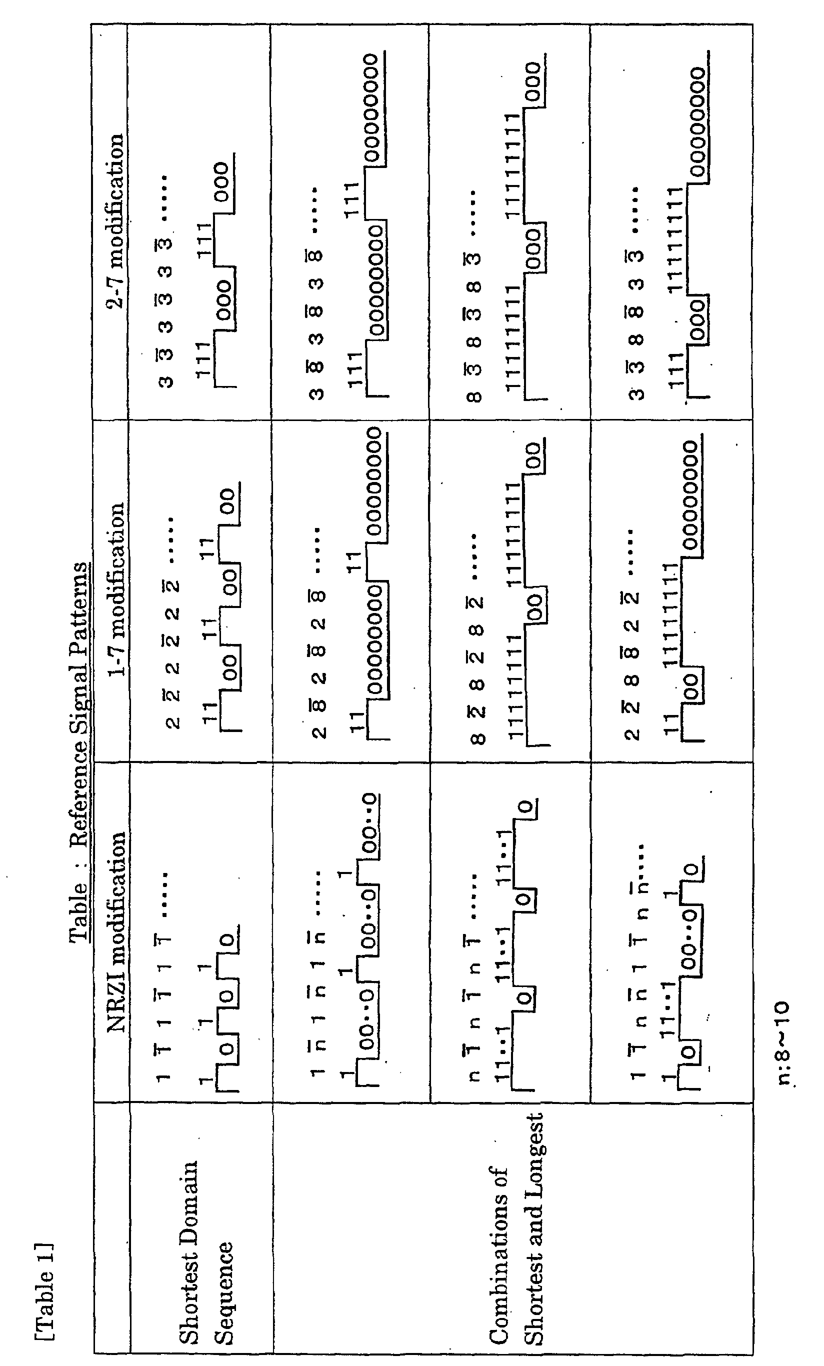

### [Direction of Magnetic Field Application]

Although in the embodiments described above, magnetic field Hex is vertically applied to magneto-optical disk 1, it is preferable that the magnetic field to include an in-plane direction component of magneto-optical disk 1.

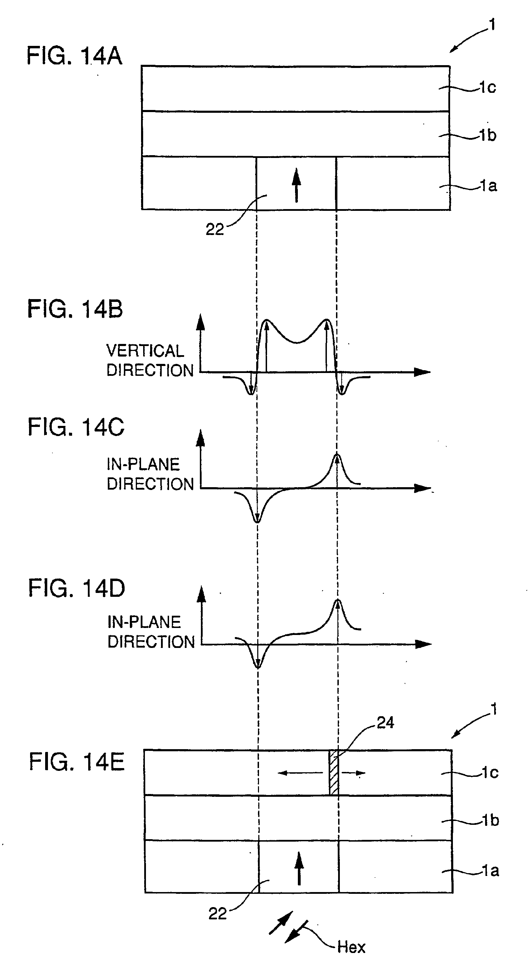

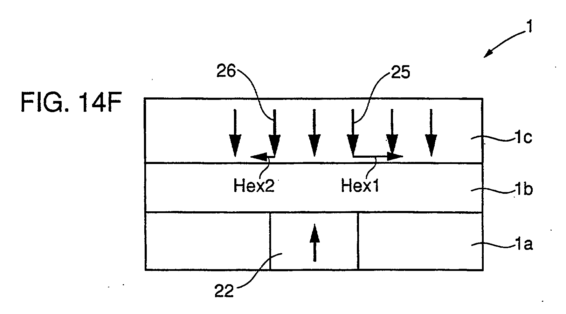

As shown in Fig. 14A, in the magnetic domain enlargement/reproduction in which magnetic domain 22 is transferred from recording layer 1a to reproducing layer 1c via non-magnetic layer 1b by magneto-static coupling and enlarged by an external magnetic field to reproduce a signal, a magnetic field distribution in the vertical direction of magnetic domain 22 in recording layer 1a is as shown in Fig. 14B. A magnetic field distribution in the in-plane direction of magnetic domain 22 generates magnetic fields at both ends of magnetic domain 22, having directions opposite to each other, as shown in Fig. 14C. If a magnetic field diagonal to recording layer 1a, i.e., a magnetic field having a component parallel to recording layer 1a, is externally applied in this state, the magnetic field distribution in the in-plane direction of the magnetic domain will be high by the amount corresponding to the component parallel to recording layer 1a of the applied magnetic field. Then, a difference between the intensity of the magnetic field in the in-plane direction at the both ends of magnetic domain 22 is generated, and the transfer to the reproduction layer 1c occurs from the end which has a higher intensity of magnetic field by magneto-static coupling as shown in Fig. 14E, which generates a seed magnetic domain 24 in reproduction layer 1c. Thereafter, the seed magnetic domain 24 is enlarged in the in-plane direction, and a magnetic domain 22 of the recording layer 1a is finally transferred to the reproduction layer 1c by magneto-static coupling and enlarged therein, as shown in Fig. 14F. When magnetic domain 22 is transferred from recording layer 1a to reproduction layer 1c, there is an applied magnetic field having a component parallel to the recording layer 1a, the external magnetic field Hex1 acts on magnetization 25 of the reproduction layer 1c and the external magnetic domain Hex2 acts on magnetization 26 thereof. Because the external magnetic field Hex1 is larger than the external magnetic domain Hex2, magnetization 25 is affected by a larger force in the in-plane direction compared to magnetization 26, and tends to inverse in a direction as same as the magnetization of magnetic domain 22 of the recording layer 1a. Therefore, an application of a magnetic field having a component parallel to the recording layer 1a can facilitate the transfer from the recording layer 1a to the reproduction layer 1c by the magneto-static coupling.

Though the optimal value of an angle formed by recording layer 1a and the application direction of the external magnetic field are indefinite, the transfer can be facilitated if the magnetic field having a component parallel to recording layer 1a is applied. It is noted that the seed magnetic domain 24 transferred to the reproduction layer 1c is enlarged due to the magnetic field vertical to the recording layer 1a.

As has been described above, transfers can be facilitated if the magnetic field having a component parallel to magneto-optical disk 1 was applied, and hence it is preferable that an alternating magnetic field having a component parallel to magneto-optical disk 1 to be applied also in step S4 which are shown in Figs. 8, 10, 12 and 13.

Thus, the magnetic domain enlargement/reproduction, performed by applying an external magnetic field having an in-plane component of magneto-optical disk 1, ensures the transfer of magnetic domain 22 from the recording layer 1a to the reproducing layer 1c, and as the result, the error rate of the reproduced signal is reduced to 0.01-0.1, compared to the case where an external magnetic field having only a component vertical to magneto-optical disk 1 was applied. Further, the external magnetic field only having the vertical component requires ± 23700AT/m, whereas the external magnetic field having a horizontal component only requires ± 15800AT/m.

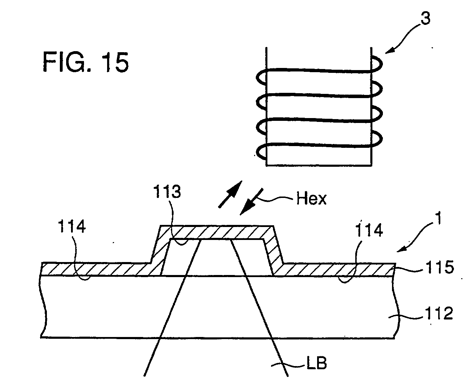

To reproduce a signal by applying a magnetic field having an in-plane component of a magnetic film, it is required to adjust a position of a magnetic head such that an emission position of the laser beam and an application position of the magnetic field correspond with each other, and the adjusting method will be described with reference to Fig. 15.

Referring to Fig. 15, a land 113 and a groove 114 are formed on a substrate 112 of an magneto-optical disk 1, and a magnetic film 115 such as a recording layer and a reproduction layer are formed on the land 113 and the groove 114. In order to apply an external magnetic field Hex having an in-plane component of the magnetic film 115, magnetic head 3 should not be located at an upper direction vertical to magnetic film 115 to where laser beam LB was emitted, but should rather be located diagonally above the magnetic film 115.

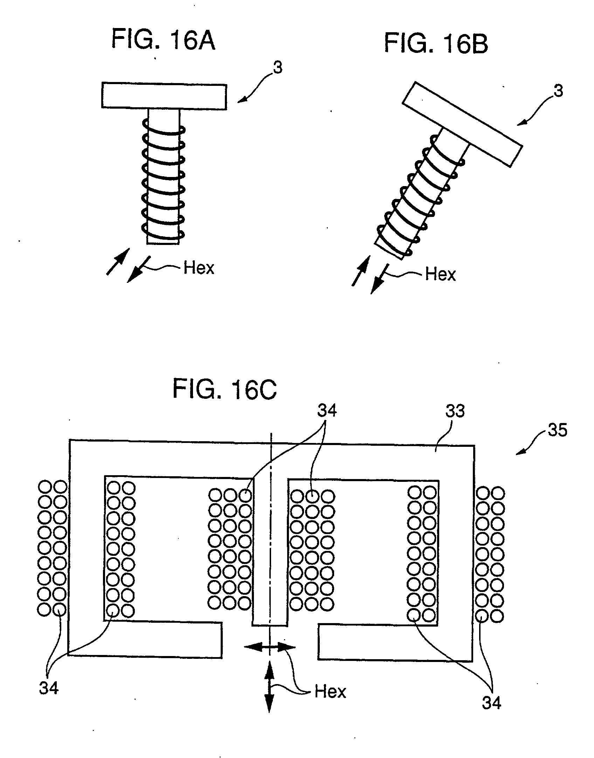

When a magnetic head 3 is located diagonally above the emitted position of the laser beam LB as shown in Fig. 15, the magnetic head 3 may be positioned perpendicular to magneto-optical disk 1 as shown in Fig. 16A and a magnetic field Hex emitting diagonally from a tip portion of the head may be utilized. Alternatively, the tip portion of magnetic head 3 may be directed in the direction of the emitted position of the laser beam LB as shown in Fig. 16B and the magnetic field Hex emitting straight from the tip can be utilized.

A magnetic head 35 in which a coil 34 is winded around a core 33 with somewhat E-shaped section can also be used to apply an external magnetic field Hex having a component parallel to magnetic film 115.

It is appreciated that the embodiments disclosed herein are only illustrative in all respects, and is not to be taken by way of limitation. It should be intended that the scope of the present invention is represented by the claims, not by the above descriptions, and that any modification equivalent of and within scope of the claims is enclosed.

## Claims

1. A method of optimizing a laser power for reproducing a signal from magneto-optical recording medium (1) using a laser beam (LB) together with an alternating magnetic field (Hex), comprising the steps of:
setting (S5, S55) said laser power to a predetermined level;
reproducing (S7, S77) a known reference signal (RF) from said magneto-optical recording medium (1) with said set laser power;
comparing (S8) said reproduced signal to said known reference signal (RF); and
determining (S9) said set laser power as an optimal laser power when said reproduced signal is identical to said known reference signal (RF) as a result of said step of comparing.

2. The method according to claim 1, further comprising the step of:
repeating said steps of setting, reproducing and comparing a plurality number of times with said predetermined level different each time.

3. The method according to claim 1, further comprising the step of:
recording (S3) said known reference signal (RF) to a predetermined calibration region (1031 to 1033) of said magneto-optical recording medium (1) before reproducing said known reference signal (RF).

4. The method according to claim 1, wherein said known reference signal (RF) is pre-recorded in said magneto-optical recording medium.

5. A magneto-optical disk apparatus (50), comprising:
an optical head (2) including a laser beam source (20) emitting a laser beam (LB) to a magneto-optical disk (1);
a magnetic head (3, 35) applying a magnetic field (Hex) to said magneto-optical disk (1); and
a discrimination circuit (15) for setting a power of said laser beam source (20) to a predetermined level, controlling said optical head (2) and said magnetic head (3, 35) such that an alternating magnetic field (Hex) is applied and a known reference signal (RF) is reproduced from said magneto-optical disk (1) with the set power, comparing the reproduced signal with said known reference signal (RF), and determining said set power as an optimal power when said reproduced signal is identical to said known reference signal (RF).

6. The magneto-optical disk apparatus according to claim 5, wherein
said discrimination circuit (15) controls said optical head (2) and said magnetic head (3, 35) such that said known reference signal (RF) is recorded to said magneto-optical disk (1) before reproducing said known reference signal (RF).

7. The magneto-optical disk apparatus according to claim 6, wherein
said optical head (2) and said magnetic head (3, 35) record said known reference signal (RF) to a predetermined calibration region (1031 to 1033) of said magneto-optical disk (1).

8. The magneto-optical disk apparatus according to claim 5, wherein
said known reference signal (RF) is pre-recorded in said magneto-optical disk (1).

9. The magneto-optical disk apparatus according to claim 5, wherein
said discrimination circuit (15) generates a power setting signal (PW representing said predetermined level,
said magneto-optical disk apparatus (50) further comprising
a laser driving circuit (4) for driving said laser beam source (20) to set a power of said laser beam source (20) in response to said power setting signal (PW) and reproduce said known reference signal (RF) with the set power, and
a magnetic head driving circuit (5) for driving said magnetic head (3, 35) such that said alternating magnetic field (Hex) is applied.

10. The magneto-optical disk apparatus according to claim 9, wherein
said laser driving circuit (4) and said magnetic head driving circuit (5) drive said optical head (2) and said magnetic head (3, 35) such that said known reference signal (RF) is recorded.

11. The magneto-optical disk apparatus according to claim 10, wherein
said discrimination circuit (15) includes
a memory (151) for storing said known reference signal (DRF),
a comparator (152) for comparing said reproduced signal with said known reference signal (DRF), and
a control circuit (157) for reading said known reference signal (DRF) from said memory (151) to supply the signal to said magnetic head driving circuit (5) for recording said known reference signal (DRF), supplying said power setting signal (PW) to said laser driving circuit (4) to reproduce said known reference signal (DRF), reading said known reference signal (DRF) from said memory (151) to supply the signal to said comparator (152), and determining said power setting signal (PW) in response to an output signal (EX) of said comparator (152).

12. The magneto-optical disk apparatus according to claim 11, wherein
said discrimination circuit (15) further includes a flip-flop circuit (154) set in response to the output signal (EX) of said comparator (152), and
said control circuit (157) determines said power setting signal (PW) in response to an output signal (Q) of said flip-flop circuit (154).

13. The magneto-optical disk apparatus according to claim 12, wherein
said discrimination circuit (15) further includes a plurality of flip-flop circuits (1541 to 1543) being set in response to the output signal (EX) of said comparator (152), and
said control circuit (157) supplies the output signal (EX) of said comparator (152) to one of said flip-flop circuits (1541 to 1543) and determines said power setting signal (PW) in response to output signals (Q1 to Q3) of said flip-flop circuits (1541 to 1543).

14. The magneto-optical disk apparatus according to claim 5, wherein
said magneto-optical disk (1) includes fine clock marks (106, 107) formed at predetermined intervals on a track,
said optical head (2) detects said fine clock marks (106, 107) to generate a fine clock mark signal (FC),
said magneto-optical disk apparatus further comprising:
an external synchronous signal generating circuit (7) generating an external synchronous signal (CK) for synchronously operating said discrimination circuit (15), said laser driving circuit (4) and said magnetic head driving circuit (5), in response to said fine clock mark signal (FC).
